# EUROPÄISCHE PATENTSCHRIFT

(11) **EP 0 497 131 B1**
(45) Veröffentlichungstag und Bekanntmachung des Hinweises auf die Patenterteilung: **14.02.1996**
(21) Anmeldenummer: 92100480.0
(22) Anmeldetag: 14.01.1992
(51) Int. Cl.: C08G 18/48, C08G 18/10, C09D 175/04

(54) **Ether- und Estergruppen aufweisende Isocyanat-Prepolymere, ein Verfahren zu ihrer Herstellung und ihre Verwendung**
Ether and ester groups containing isocyanate prepolymers, a process for their preparation and their use
Prépolymères d'isocyanate contenant des groupes d'ether- et d'ester, son procédé pour leur préparation et leur utilisation

(30) Priorität: 26.01.1991 DE 4102341
(43) Veröffentlichungstag der Anmeldung: 05.08.1992
(73) Patentinhaber: BAYER AG, D-51368 Leverkusen (DE)
(72) Erfinder: Schmalstieg, Lutz, Dr., W-5000 Köln (DE); Höhlein, Peter, Dr., W-4152 Kempen 3 (DE); Pedain, Josef, Dr., W-5000 Köln 80 (DE); Wieczorrek, Wolfhart, Dipl.-Ing., W-5000 Köln 90 (DE)

(56) Entgegenhaltungen:
- EP-A- 0 209 823
- EP-A- 0 301 345
- EP-A- 0 371 294
- US-A- 4 132 839

## Beschreibung

Die Erfindung betrifft neue, bei Raumtemperatur flüssige, Ether- und Estergruppen aufweisende Isocyanatprepolymere, ein Verfahren zu ihrer Herstellung und ihre Verwendung als Bindemittel in lösungsmittelfreien oder -armen Polyurethan-Beschichtungsmitteln, Dichtmassen oder Vergußmassen.

Beschichtungsmittel und Vergußmassen, welche zu Polyurethanen ausreagierende Gemische als Bindemittel enthalten sind bekannt (vgl. z.B. Wagner Sarx, Lackkunstharze, 5. Auflage, Carl Hanser Verlag, München, 1971, Seite 153 bis 173 sowie Kunststoffhandbuch, Band 7, Hanser Verlag 1983, Seite 540 bis 561, bzw. Seiten 425 bis 428).

Auf den Seiten 169 bis 170 der erstgenannten Veröffentlichung und auf den Seiten 556 bis 559 der zweitgenannten Veröffentlichung sind auch lösemittelfreie Systeme beschrieben, die es gestatten, beliebig dicke Beschichtungen in einem Arbeitsgang herzustellen. Die lösemittelfreien Beschichtungsmittel sind im Zusammenhang mit der stärkeren Beachtung der Umwelthygiene besonders interessant geworden. Zur Herstellung von lösemittelfreien Beschichtungen sind niedrigviskose Ausgangsstoffe erforderlich.

Bindemittel, bestehend aus Isocyanat-Prepolymeren und (potentiell) gegenüber Isocyanaten reaktiven Verbindungen sind in großer Fülle bekannt. So beschreibt z.B. die DE-OS 1 520 139 ein Verfahren zur Herstellung von feuchtigkeitshärtenden Mischungen aus Polyisocyanaten und Polyketiminen oder Polyaldiminen, wobei als Polyisocyanate vorzugsweise Isocyanat-Prepolymere (NCO-Prepolymere) verwendet werden. Die DE-AS 1 240 654 beschreibt ein Verfahren zur Herstellung von vernetzten Kunststoffen aus NCO-Prepolymeren und speziellen aromatischen Diaminen. Die DE-OS 2 018 233 beschreibt durch Feuchtigkeit härtbare Zubereitungen aus Isocyanatgruppen aufweisenden Verbindungen und Polyoxazolidinen.

NCO-Prepolymere des Standes der Technik werden durch Reaktion von höhermolekularen Polyhydroxylverbindungen wie z.B. Polyether- oder Polyester-Polyolen mit überschüssigen Mengen Di- oder Polyisocyanat hergestellt.

Prepolymere auf Basis von Polyesterpolyolen ergeben nach Vernetzung Kunststoffe mit guter Resistenz gegen Licht- und Wärmealterung. Die Prepolymere sind aber aufgrund ihrer chemischen Konstitution bei Raumtemperatur hochviskos oder sogar kristallin, so daß sie nur unter Zusatz von Losemitteln und/oder Weichmachern zu verarbeiten sind.

Prepolymere auf Basis von Polyetherpolyolen sind bei Raumtemperatur hinreichend niedrigviskos, so daß sie auch zur lösemittelarmen oder -freien Verarbeitung geeignet sind. Nach Vernetzung dieser Prepolymere erhält man Kunststoffe mit guter Beständigkeit gegen hydrolytische Einflüsse, die jedoch deutlich Schwächen hinsichtlich Licht- und Sauerstoffbeständigkeit aufweisen. Nachteilig ist außerdem die verstärkte Blasenbildung, die im Verlauf der Härtung solcher Prepolymere auftritt.

Um die positiven Eigenschaften der Polyesterpolyurethane mit denen der Polyetherpolyurethane zu kombinieren, bieten sich gemäß dem Stand der Technik zwei Lösungen an:
1. Prepolymerisierung von Polyether/Polyester-Mischungen mit Di- oder Polyisocyanaten
2. Herstellung Ether- und Estergruppen-haltiger Polyole wie dies z.B. beschrieben ist in DE-OS 33 15 382, DE-PS 22 10 839, DE-OS 16 45 674, EP-A-0 178 562 oder DE-OS 11 78 955 und Prepolymerisierung solcher Polyole mit Di- oder Polyisocyanaten.

Die gemäß 1) oder 2) hergestellten Ether- und Estergruppen aufweisenden Isocyanatprepolymere besitzen jedoch stets höhere Viskositäten als die Prepolymeren auf Polyetherpolyol-Basis. Daher können solche Prepolymere vielfach nur unter Zusatz von organischen Lösungsmitteln oder Weichmachern verwendet werden.

Die Verwendung von Lösungsmitteln ist aber bekanntlich unter ökologischen Gesichtspunkten von Nachteil. Gesetzgeberische Auflagen fordern den Einsatz möglichst lösungsmittelarmer Beschichtungssysteme. Auch der Einsatz von Weichmachern ist mit Nachteilen verbunden. Weichmacher verbleiben in den Beschichtungen, können die mechanischen Eigenschaften der Polymere verschlechtern, die Haftung zum Substrat beeinträchtigen und schließlich auf lange Sicht aus den Beschichtungen auswandern.

Die der Erfindung zugrundeliegende Aufgabe besteht daher darin, Ether- und Estergruppen aufweisende Isocyanatprepolymere zur Verfügung zu stellen, die mindestens genauso niedrige Viskositäten aufweisen wie Diisocyanatprepolymeren auf Basis von Polyetherpolyolen des Standes der Technik, jedoch ohne mit deren Nachteilen behaftet zu sein.

Diese Aufgabe konnte mit der Bereitstellung der nachstehend näher beschriebenen Isocyanatprepolymere gelöst werden.

Der Erfindung liegt die überraschende Beobachtung zugrunde, daß Prepolymere aus bestimmten Ether- und Estergruppen aufweisenden Polyhydroxylverbindungen und handelsüblichen Polyisocyanaten bedeutend niedrigere Viskositäten aufweisen als Prepolymere auf Basis derselben Polyisocyanate mit konventionellen Polyethern und/oder Polyestern.

Ethergruppen enthaltende Polyesterurethane auf Basis von mindestens trifunktionellen Ester- und Ethergruppen aufweisenden Polyolen werden in EP-A-0 301 345 beschrieben und als Reaktivverdünner für oxidativ trocknende Bindemittel empfohlen. Es handelt sich bei diesen Polyurethanen jedoch nicht um NCO-Prepolymere sondern um Isocyanat-freie Verbindungen.

Gegenstand der Erfindung sind Ether- und Estergruppen aufweisende Isocyanatprepolymere mit einem NCO-Gehalt von 1,9 bis 25 Gew.-% auf Basis von
A) einer Polyisocyanatkomponente, bestehend aus mindestens einem organischen Polyisocyanat des mittleren Molekulargewichts 168 bis 1000,
   und organischen Polyhydroxylverbindungen, bestehend im wesentlichen aus
B) Ether- und Estergruppen aufweisenden Polyhydroxylverbindungen
   und gegebenenfalls
C) organischen Polyhydroxylverbindungen des Molekulargewichtsbereichs 62 bis 200 in einer Menge von bis zu 25 Hydroxyläquivalent-%, bezogen auf die Komponente B),
   dadurch gekennzeichnet, daß die Polyhydroxylverbindungen B) eine mittlere Hydroxylfunktionalität von 2 bis 3 und eine mittlere Hydroxylzahl von 40 bis 90 aufweisen und Veresterungsprodukte von
   (i) Polyetherpolyolen einer mittleren Hydroxylzahl von 200 bis 600 mit
   (ii) 25 bis 67 Äquivalent-% einer organischen Carbonsäure-Komponente, bestehend aus mindestens einer organischen Monocarbonsäure oder einem Gemisch mindestens einer organischen Monocarbonsäure mit bis zu 20 Carboxyl-Äquivalent-%, bezogen auf alle Carbonsäuren, an mehrbasischen organischen Carbonsäuren,

   bezogen auf die Hydroxylgruppen der Komponente (i) und die Carboxylgruppen der Komponente (ii), darstellen.

Gegenstand der Erfindung ist auch ein Verfahren zur Herstellung von derartigen Ether- und Estergruppen aufweisenden Isocyanatprepolymeren durch Umsetzung von
A) organischen Polyisocyanaten des mittleren Molekulargewichts 168 bis 1000
   mit organischen Polyhydroxylverbindungen, bestehend im wesentlichen aus
B) Ether- und Estergruppen aufweisenden Polyhydroxylverbindungen
   und gegebenenfalls
C) organischen Polyhydroxylverbindungen des Molekulargewichtsbereichs 62 bis 200 in einer Menge von bis zu 25 Hydroxyläquivalent-%, bezogen auf die Komponente B),
   unter Einhaltung eines NCO/OH-Äquivalentverhältnisses von 1,7:1 bis 20:1 und gegebenenfalls anschließende destillative Entfernung von nicht umgesetzten, überschüssigen Ausgangspolyisocyanaten A), dadurch gekennzeichnet, daß man als Komponente B) Ether- und Estergruppen aufweisende Polyhydroxylverbindungen mit einer mittleren Hydroxylfunktionalität von 2 bis 3 und einer mittleren Hydroxylzahl von 40 bis 90 verwendet, die Veresterungsprodukte von
   (i) Polyetherpolyolen einer mittleren Hydroxylzahl von 200 bis 600 mit
   (ii) 25 bis 67 Äquivalent-% einer organischen Carbonsäure-Komponente, bestehend aus mindestens einer organischen Monocarbonsäure oder einem Gemisch mindestens einer organischen Monocarbonsäure mit bis zu 20 Carboxyl-Äquivalent-%, bezogen auf alle Carbonsäuren, an mehrbasischen organischen Carbonsäuren,

   bezogen auf die Hydroxylgruppen der Komponente (i) und die Carboxylgruppen der Komponente (ii), darstellen.

Gegenstand der Erfindung ist schließlich auch die Verwendung der erfindungsgemäßen Isocyanatprepolymeren als Bindemittel oder Bindemittelkomponente in lösungsmittelarmen oder -freien Polyurethan-Beschichtungsmitteln, -Dichtmassen oder -Vergußmassen.

Ether- und Estergruppen aufweisende Polyhydroxylverbindungen, die Umsetzungsprodukte von Polyetherpolyolen mit einwertigen Carbonsäuren darstellen, sind bereits aus EP-A 0 209 823 oder aus US-PS 3 248 349 bekannt. Die Polyhydroxylverbindungen dieser Vorveröffentlichungen unterscheiden sich jedoch bezüglich der erfindungsgemäß einzusetzenden Komponente B) durch ihre Hydroxylzahl. Außerdem werden die Polyhydroxylverbindungen nicht zur Herstellung von NCO-Prepolymeren sondern als Polyolkomponente in Zweikomponenten-Polyurethansystemen (EP-A-0 209 823) oder als Reaktionspartner für organische Polyisocyanate bei der Herstellung von Polyurethanschaumstoffen (US-PS 3 248 349) empfohlen.

Ausgangsmaterialien für die Herstellung der erfindungswesentlichen Polyhydroxylverbindungen sind beliebige Polyetherpolyole bzw. Polyetherpolyolgemische einer mittleren Hydroxylfunktionalität von 4 bis 6 und einer (mittleren) Hydroxylzahl von 200 bis 600 mg KOH/g. Diese Polyetherpolyole können in an sich bekannter Weise durch Alkoxylierung geeigneter Startermoleküle oder geeigneter Gemische von Startermolekülen erhalten werden, wobei bei der Alkoxylierung insbesondere Propylenoxid und/oder Ethylenoxid, gegebenenfalls im Gemisch, und/oder nacheinander in beliebiger Reihenfolge zum Einsatz gelangen.

Gewünschtenfalls können auch andere Alkylenoxide wie z.B. 1,2-Butylenoxid, 2,3-Butylenoxid oder Styroloxid bei der Herstellung der Polyetherpolyole (mit)-verwendet werden. Geeignete Startermoleküle sind beispielsweise mindestens tetrafunktionelle Alkohole wie Pentaerythrit, Sorbit, Mannit, Saccharose, Lactose, Sorbitan, α-Methylglykosit, α-Hydroxyalkylglykosit bzw. deren Gemische mit di- und/oder trifunktionellen Startermolekülen wie z.B. Wasser, Ethylenglykol, Propylenglykol, Glycerin oder Trimethylolpropan, wobei bei der Verwendung von Gemischen von Startermolekülen die genannte Bedingung bezüglich Hydroxylfunktionalität beachtet werden sollte.

Es ist jedoch nicht erforderlich, die Funktionalität der Komponente (i) durch Auswahl der bei der Alkoxylierung einzusetzenden Startermoleküle einzustellen, sondern es ist vielmehr auch möglich, separat hergestellte Polyetherpolyole unterschiedlicher Funktionalität und Hydroxylzahl so miteinander abzumischen, daß das Gemisch den obengenannten Bedingungen bezüglich Funktionalität und Hydroxylzahl entspricht. Es ist ferner möglich, bei der Herstellung der Polyetherpolyole bzw. der Einzelkomponenten des Polyetherpolyolgemisches als Startermoleküle Mono- oder Polyamine wie z.B. Ethylamin, Ethanolamin, Ethylendiamin oder Hexamethylendiamin zu verwenden bzw. mitzuverwenden, obwohl dies weniger bevorzugt ist.

Als Komponente (ii) können bei der Herstellung der erfindungsgemäßen Polyhydroxylverbindungen beliebige natürliche oder synthetische Monocarbonsäuren oder Gemische von Monocarbonsäuren verwendet werden. Die Monocarbonsäuren enthalten von 2 bis 30, vorzugsweise mindestens 10, insbesondere 10 bis 24 Kohlenstoffatome. Vorzugsweise werden aliphatische Monocarbonsäuren eingesetzt, besonders bevorzugt werden ungesättigte Fettsäuren mit einer Iodzahl von 10 bis 300 verwendet. Beispiele geeigneter Monocarbonsäuren sind Essigsäure, Buttersäure, n-Heptancarbonsäure, n-Nonancarbonsäure, n-Tridecancarbonsäure, Palmitinsäure, Stearinsäure, Benzoesäure, synthetische Fettsäuregemische mit 10 bis 18 Kohlenstoffatomen und insbesondere ungesättigte Fettsäuren wie Sojafettsäure, Erdnußölfettsäure, Saflorölfettsäure, Konjuvandolfettsäure, Ölsäure, Tallölfettsäure oder Gemische derartiger Carbonsäuren. Die Mitverwendung von geringen Mengen (bis zu 20 Äquivalent-%, bezogen auf die Carboxylgruppen) an mehrbasischen Carbonsäuren wie z.B. von Adipinsäure, Phthalsäure oder Terephthalsäure ist nicht grundsätzlich ausgeschlossen, jedoch keinesfalls bevorzugt, da die Mitverwendung derartiger mehrbasischer Säuren im allgemeinen zu einer unerwünschten Viskositätserhöhung führt. Die verwendeten Monocarbonsäuren weisen vorzugsweise keine Substituenten wie beispielsweise Hydroxylgruppen auf. Völlig ausgeschlossen ist die Verwendung von Estern von Hydroxycarbonsäuren, insbesondere von Rizinusöl anstelle der Monocarbonsäuren im Sinne einer Umesterungsreaktion.

Die Monocarbonsäuren werden bei der Herstellung der erfindungsgemäßen Polyhydroxylverbindungen in einer Menge von 25 bis 67 Äquivalent-%, bezogen auf die Hydroxylgruppen der Komponente (i) einerseits und die Carboxylgruppen der Komponente (ii) andererseits eingesetzt.

Die Durchführung der Veresterungsreaktion erfolgt in an sich bekannter Weise so wie dies ausführlich in der EP-A 0 209 823 und der dort zitierten Literatur beschrieben ist.

Die so erhaltenen erfindungsgemäß einzusetzenden Polyhydroxylverbindungen weisen eine (mittlere) Hydroxylfunktionalität von 2 bis 3, vorzugsweise 2 bis 2,5 auf, eine mittlere Hydroxylzahl von 40 bis 90 und eine Säurezahl unter 5 auf. Ihre Viskosität liegt im allgemeinen bei 250 bis 1500 mPa.s/22°C.

Als Polyisocyanatkomponente A) kommen beliebige organische Polyisocyanate des mittleren Molekulargewichts 168 bis 1000 in Betracht. Geeignete Polyisocyanate sind beispielsweise Hexamethylendiisocyanat, 1,3- und 1,4-Diisocyanatocyclohexan sowie beliebige Gemische dieser Isomeren, 1-Isocyanato-3,3,5-trimethyl-5-isocyanatomethyl-cyclohexan (Isophorondiisocyanat), 4,4'-Diisocyanato-dicyclohexylmethan, 2,4-Diisocyanatotoluol oder dessen technische Gemische mit vorzugsweise bis zu 35 Gew.-%, bezogen auf Gemisch an 2,6-Diisocyanatotoluol, 2,4'-Diisocyanatodiphenylmethan, 2,2'-Diisocyanatodiphenylmethan oder 4,4'-Diisocyanatodiphenylmethan.

Bevorzugt werden jedoch wenig- oder nichtflüchtige Polyisocyanate eingesetzt, wie sie z.B. durch Cyclotrimerisation oder Biuretisierung der obengenannten Diisocyanate erhältlich sind. Auch niedermolekulare NCO-Prepolymere auf Basis der obengenannten Diisocyanate sind erfindungsgemäß einsetzbar.

Zu den bevorzugten Polyisocyanaten A) gehören aromatische Polyisocyanate des mittleren Molekulargewichts 174 bis 500, insbesondere bei Raumtemperatur flüssige Polyisocyanatgemische der Diphenylmethanreihe. Hierunter sind Gemische von 4,4'-Diisocyanatodiphenylmethan mit 2,4- und gegebenenfalls 2,2-Diisocyanatodiphenylmethan oder Gemische dieser Isomeren mit ihren höheren Homologen zu verstehen, wie sie in an sich bekannter Weise durch Phosgenierung von Anilin/Formaldehyd-Kondensaten erhalten werden. Zu den "Polyisocyanatgemischen der Diphenylmethanreihe" sollen im Rahmen der Erfindung jedoch auch Umsetzungsprodukte von 4,4'-Diisocyanatodiphenylmethan oder von Gemischen aus 4,4'-Diisocyanatodiphenylmethan mit 2,4-Diisocyanatodiphenylmethan und gegebenenfalls 2,2'-Diisocyanatodiphenylmethan oder von Isomeren- und Homologengemischen der genannten Art mit unterschüssigen Mengen an mehrwertigen Alkoholen, insbesondere Propylenglykolen mit einem mittleren Molekulargewicht von bis zu 700 oder auch die carbodiimidmodifizierten Derivate dieser Polyisocyanate bzw. Polyisocyanatgemische verstanden werden. Bei den bevorzugten Polyisocyanaten A) handelt es sich jedenfalls um solche, die bei Raumtemperatur flüssig sind und einen Isocyanatgehalt von ca. 20 bis 33 Gew.-% aufweisen.

Zur Durchführung des erfindungsgemäßen Verfahrens zur Herstellung der erfindungsgemäßen Isocyanatprepolymeren werden die Polyisocyanate A) mit den Polyhydroxylverbindungen B) bei Temperaturen von 40 bis 140°C, vorzugsweise 50 bis 110°C eingesetzt. Die Mengen der Reaktionspartner entsprechen dabei im allgemeinen einem NCO/OH-Äquivalentverhältnis von 1,7:1 bis 20:1.

Bei Verwendung leichtflüchtiger Polyisocyanate werden die Mengen der Komponenten A) und B) in der Regel so ausgewählt, daß sie einem NCO/OH-Verhältnis von 1,7:1 bis 2:1 entsprechen. Bei Verwendung eines größeren Überschusses an leichtflüchtigen Polyisocyanaten sollte dieser Überschuß nach der Prepolymerisierung durch Dünnschichtdestillation entfernt werden. Bei der Herstellung von Prepolymeren auf Basis von schwerflüchtigen Polyisocyanaten, insbesondere Polyisocyanaten der Diphenylmethanreihe, kann ein größerer Überschuß Polyisocyanat im Prepolymer verbleiben. In diesen Fällen hat sich überraschenderweise gezeigt, daß die Viskosität der Prepolymere weitgehend unabhängig von gewählten NCO/OH-Verhältnis ist. Bei der Herstellung der erfindungsgemäßen Prepolymere können gegebenenfalls die aus der Polyurethanchemie an sich bekannten Katalysatoren wie 1,4-Diazabicyclo(2,2,2)octan, Bis-(dimethylamino-methyl)-phenol, Benzyldimethylamin, Bis-(dodecanoyloxy)-dibutyl-zinn, Bis-(ethyl-hexanoyloxy)-zinn usw. mitverwendet werden.

Die Mitverwendung von organischen Polyhydroxylverbindungen des Molekulargewichtsbereichs 62 bis 200 in Mengen von bis zu 25 Hydroxyläquivalent-%, bezogen auf die Hydroxylgruppen der Komponente B) ist prinzipiell möglich, jedoch aufgrund der rasch ansteigenden Viskosität der Prepolymeren keineswegs bevorzugt. Beispiele für derartige Kettenverlängerungsmittel bzw. Vernetzer sind Glykol, 1,3-Butandiol, 1,4-Butandiol, 1,6-Hexandiol, Glycerin oder Trimethylolpropan, Andere, nicht erfindungswesentliche Polyhydroxylverbindungen eines über 200 liegenden Molekulargewichts können ebenfalls in untergeordneten Mengen mitverwendet werden, jedoch ist dies keinesfalls bevorzugt.

Die erfindungsgemäßen NCO-Prepolymeren weisen lösungsmittelfrei einen NCO-Gehalt von 1,9 bis 25, vorzugsweise von 4 bis 20 Gew.-% und bei 23°C eine Viskosität von 100 bis 20 000, vorzugsweise von 200 bis 10 000 mPa.s auf.

Aufgrund ihrer niedrigen Viskosität sind die erfindungsgemäßen NCO-Prepolymere hervorragend geeignet zur Herstellung lösemittelfreier oder -armer feuchtigkeitshärtender Einkomponenten-Polyurethan-Beschichtungs-, Verguß- oder Dichtungsmassen. Außerdem eignen sich die erfindungsgemäßen Polymeren insbesondere als Isocyanatkomponente in Zwei-Komponenten-Polyurethan-Systemen.

Im Falle der Verwendung der erfindungsgemäßen Isocyanatprepolymeren als Polyisocyanatkomponente in Zweikomponenten-Polyurethansystemen besteht die zweite Komponente aus mindestens einer Verbindung mit mindestens zwei gegenüber Isocyanatgruppen reaktionsfähigen Gruppen oder mindestens zwei hydrolytisch in derartige Gruppen überführbare Gruppen. Ebenfalls möglich, jedoch weniger bevorzugt, ist die Verwendung von solchen Verbindungen, die sowohl freie als auch derartige reversibel blockierte, gegenüber Isocyanatgruppen reaktionsfähige Gruppen aufweisen. Weiterhin möglich, jedoch ebenfalls weniger bevorzugt, ist die Verwendung von unterschiedlichen derartigen Verbindungen, auch von solchen Gemischen, die sowohl Verbindungen mit freien als auch Verbindungen mit reversibel blockierten, gegenüber Isocyanatgruppen reaktionsfähigen Gruppen aufweisen.

Vorzugsweise weisen die Verbindungen pro Molekül 2 bis 4 freie oder blockierte, gegenüber Isocyanatgruppen reaktionsfähige Gruppen auf.

Die Menge der genannten zweiten Komponente wird im übrigen so bemessen, daß in den erfindungsgemäßen Zweikomponenten-Bindemittelgemischen das Äquivalentverhältnis von Isocyanatgruppen der erfindungsgemäßen IsocyanatprepoLymeren zu freien und/oder reversibel blockierten, gegenüber Isocyanatgruppen reaktionsfähigen Gruppen der genannten Zweikomponente bei 0,8:1 bis 2:1 und, besonders bevorzugt 1:1 bis 1,2:1, liegt.

Als Reaktionspartner für die erfindungsgemäßen Isocyanatprepolymeren in Zweikomponenten-Systemen kommen beispielsweise in Betracht:
- Polyoxazolidine der aus der Polyurethanchemie an sich bekannten Art, wie sie z.B. in DE-PS 2 018 233 (= US-PS 3 743 626) oder DE-OS 2 446 438 (= US-PS 4 002 601) beschrieben sind;
- Polyketimine oder Polyaldimine der aus der Polyurethanchemie an sich bekannten Art, wie sie beispielsweise in DE-OS 1 520 139 (= US-PS 3 420 800) bzw. US-PS 3 567 692 oder DE-OS 3 308 418 (= US-PS 4 481 345) beschrieben sind;
- aromatische Polyamine, insbesondere Diamine mit sterisch gehinderten Aminogruppen, wie sie beispielsweise gemäß US-PS 4 218 543 als Kettenverlängerungsmittel eingesetzt werden, besonders bevorzugt das 1-Methyl-3,5-diethyl-2,4-diaminobenzol bzw. dessen technischen Gemische mit 1-Methyl-3,5-diethyl-2,6-diaminobenzol oder
- mehrwertige Alkohole des Molekulargewichtsbereichs 62 bis 399 oder auch eines Molekulargewichts von mindestens 400. Geeignete niedermolekulare Alkohole sind beispielsweise Ethylenglykol, Propylenglykol, Butandiol-1,4, Glycerin, Trimethylolpropan, Pentaerythrit, Diethylenglykol, Dipropylenglykol oder Gemische derartiger Polyole. Geeignete höhermolekulare Alkohole sind beispielsweise die obengenannten Ausgangsmaterialien B) für die Herstellung der Polyisocyanat-Prepolymere. Ferner geeignet sind auch andere Polyhydroxylverbindungen wie beispielsweise Epoxidharze, Phenolharze, Alkydharze, Rizinusöl, Hydroxylgruppen aufweisende Polyesterharze oder Hydroxylgruppen aufweisende Silikonharze.

Zur Herstellung der erfindungsgemäßen Zweikomponenten-Bindemittel werden die Einzelkomponenten miteinander vermischt. Im Falle der Verwendung von Verbindungen mit reversibel blockierten, gegenüber Isocyanatgruppen reaktionsfähigen Gruppen, insbesondere mit reversibel blockierten Aminogruppen entstehen hierbei lagerstabile Zubereitungen, die in Abwesenheit von Feuchtigkeit lagerstabil sind und nach Applikation auf ein geeignetes Substrat in Gegenwart von Feuchtigkeit schnell aushärten. Erforderlichenfalls kann die Härtungsreaktion auch durch Zugabe von an sich bekannten Katalysatoren wie beispielsweise p-Toluolsulfonsäure, Dibutylzinnoctoat oder Zinkchlorid beschleunigt werden.

Im Falle der Verwendung von Reaktivkomponenten, die freie, gegenüber Isocyanatgruppen reaktionsfähige Gruppen, d.h., insbesondere Amino- oder Hydroxylgruppen aufweisen, entstehen Reaktionsgemische, die bereits bei Raumtemperatur zu Polyurethanen bzw. Polyharnstoffen ausreagieren, d.h., die nur eine begrenzte Topfzeit aufweisen und innerhalb dieser Topfzeit verarbeitet werden müssen.

Im übrigen ist der hier verwendete Begriff "Zweikomponenten-Bindemittel" dahingehend zu verstehen, daß die erfindungsgemäßen Bindemittel aus den genannten Einzelkomponenten bestehen, wobei die Einzelkomponenten im Falle der Verwendung von blockierten Reaktivkomponenten für die erfindungsgemäßen Isocyanatprepolymeren auch zu einem "Eintopf-System" vereinigt werden können.

Vor, während oder nach der Herstellung der Bindemittel durch Vermischen der Einzelkomponenten können den einzelnen Komponenten bzw. den erfindungsgemäßen Kombinationen inerte organische Lösungsmittel oder Weichmacher zugegeben werden.

Insbesondere bei Verwendung von Polyoxazolidinen, Polyketiminen oder Polyaldiminen als Reaktivkomponente für die erfindungsgemäßen Isocyanatprepolymeren sollten diese Lösungsmittel oder Weichmacher weitgehend wasserfrei sein, um eine ausreichende Lagerstabilität der Bindemittel zu gewährleisten. Entsprechend der Aufgabenstellung, möglichst lösungsmittelarme Bindemittel zur Verfügung zu stellen, ist die Verwendung von Lösungsmitteln oder Weichmachern jedoch weniger bevorzugt.

Der für die meisten Anwendungen erforderliche Zusatz von Pigmenten und anderen Hilfs- und Zusatzmitteln wie Füllstoffen, Verlaufshilfsmitteln usw. wird vorzugsweise so vorgenommen, daß diese Zusatzmittel vor Herstellung der erfindungsgemäßen Bindemittel in eine der Ausgangskomponenten eingemischt werden.

Die erfindungsgemäßen Ein- und Zwei-Komponenten-Bindemittel eignen sich insbesondere zur Herstellung von Beschichtungs- und Dichtungsmassen. Die erfindungsgemäße Bindemittel enthaltenden Beschichtungsmassen können nach an sich bekannten Methoden, wie beispielsweise durch Spritzen, Streichen, Tauchen, Fluten oder mit Hilfe von Walzen oder Rakeln auf beliebige Substrate ein- oder mehrschichtig aufgetragen werden. Als Substrate eignen sich beispielsweise Metall, Holz, Glas, Stein, keramische Materialien, Beton, harte und flexible Kunststoffe, Textilien, Leder oder Papier.

Die Substrate können selbstverständlich vor der Applikation der, erfindungsgemäße Bindemittel enthaltenden Beschichtungsmittel mit den üblichen Grundierungen versehen sein.

Die nachfolgenden Beispiele dienen zur weiteren Erläuterung der Erfindung. Prozentangaben beziehen sich, wenn nicht anders angegeben, auf Gewichtsprozente.

### Beispiele

### Polyhydroxylverbindung B1

In einem mit Rührer, Heizung, Stickstoffeinleitungsrohr, Kolonne und Wasserabgang ausgestatteten 15 1-Rührkessel werden 6230 g Sojaölfettsäure und 4633 g einer 90 %igen wäßrigen Lösung eines durch Propoxylierung von Sorbit gewonnenen Polyethers der OH-Zahl 450 (mittleres Molekulargewicht 750) unter Durchleiten von Stickstoff eingewogen. Danach wird in ca. 3 Stunden auf 200°C aufgeheizt. Dabei darf die im Kopf der Kolonne gemessene Temperatur von 105°C nicht überschritten werden. Sobald die Sumpftemperatur von 200°C erreicht ist und die Kopftemperatur 90°C unterschreitet, wird zuerst die Kolonne entfernt und danach der Stickstoffstrom auf 30 l/h erhöht. Es wird solange kondensiert, bis eine Säurezahl von 1,4 mg KOH/g Substanz erreicht worden ist. Dann wird auf 100°C abgekühlt und das Produkt über ein Gewebefilter filtriert. Das so erhaltene Produkt besitzt folgende Kenndaten:
Viskosität: 310 mPa.s/23°C
Säurezahl: 1,4 mg KOH/g Produkt
OH-Zahl: 66
Iodfarbzahl: 2
mittlere Hydroxylfunktionalität: 2

### Polyhydroxylverbindung B2

Es wird wie bei Polyhydroxylverbindung B1 beschrieben verfahren. Zum Einsatz kommen 5960 g synthetische Fettsäure (®Prichem 9600, Molekulargewicht 225, Hersteller: Fa. Unichema) und 4965 g einer 90 %igen wäßrigen Lösung eines durch Propoxylierung von Sorbit gewonnenen Polyethers der OH-Zahl 450 (mittleres Molekulargewicht 750). Nach der Umsetzung resultiert ein Polyol mit folgenden Kenndaten:
Viskosität: 450 mPa.s/23°C
Säurezahl: 1,3 mg KOH/g Produkt
OH-Zahl: 70
Iodfarbzahl: 3
mittlere Hydroxylfunktionalität: 2

### Polyhydroxylverbindung B3

Es wird wie bei Polyhydroxylverbindung B1 beschrieben verfahren. Zum Einsatz kommen 2630 g Erdnußölfettsäure und 4633 g der bei Polyhydroxylverbindung B1 eingesetzten wäßrigen Polyetherlösung. Nach der Umsetzung resultiert ein Polyol mit folgenden Kenndaten:
Viskosität: 360 mPa.s/23°C
Säurezahl: 1,4 mg KOH/g Produkt
OH-Zahl: 67
Iodfarbzahl: 4
mittlere Hydroxylfunktionalität: 2

### Beispiel 1 - Prepolymer 1

86,15 g 2,4-Diisocyanatotoluol und 413,85 g Polyhydroxylverbindung B3 werden auf 50°C erwärmt und 7 h bei dieser Temperatur prepolymerisiert. Es resultiert ein NCO-Prepolymer mit folgenden Kenndaten:
NCO-Gehalt: 4,1 %
Viskosität: 4700 mPa.s/23°C
Monomerengehalt: 0,85 % freies 2,4-Diisocyanatotoluol

### Beispiel 2 - Prepolymer 2

111 g Isophorondiisocyanat und 400 g Polyhydroxylverbindung B2 werden unter Zusatz von 0,2 g Dibutylzinndilaurat 6 h bei 60°C prepolymerisiert. Es resultiert ein Prepolymer mit folgenden Kenndaten:
NCO-Gehalt: 4,05 %
Viskosität: 5800 mPa.s/23°C
Monomerengehalt: 2,8 % freies Isophorondiisocyanat

### Beispiel 3 - Prepolymer 3

1110 g Isophorondiisocyanat und 800 g Polyhydroxylverbindung B2 werden bei 100°C prepolymerisiert bis der theoretische NCO-Gehalt von 26,4 X erreicht ist. Anschließend wird die Mischung einer Dünnschichtdestillation bei 140°C/0,1 mbar unterworfen. Nach Destillation erhält man ein Prepolymer mit folgenden Kenndaten:
NCO-Gehalt: 4,35 %
Viskosität: 4100 mPa.s/23°C
Monomerengehalt: <0,5 % freies Isophorondiisocyanat

### Beispiel 4 - Prepolymer 4

703 g eines durch Trimerisation von 1,6-Diisocyanatohexan gewonnenen Polyisocyanurat-Polyisocyanats mit einem NCO-Gehalt von 21,5 % und einer Viskosität von 3000 mPa.s/23°C (®Desmodur N 3300, Handelsprodukt der Bayer AG) werden mit 297 g Polyhydroxylverbindung B1 2 Stunden bei 85°C prepolymerisiert. Es resultiert ein Prepolymer mit folgenden Kenndaten:
NCO-Gehalt: 13,1 %
Viskosität: 15000 mPa.s/23°C

### Beispiel 5 - Prepolymer 5

655 g eines Polyisocyanatgemisches der Diphenylmethanreihe mit einem NCO-Gehalt von 31 % und einer Viskosität von 40 mPa.s/23°C (®Desmodur VL 50, Handelsprodukt der Bayer AG) werden mit 343 g Polyhydroxylverbindung B1 3 Stunden bei 50°C prepolymerisiert. Es resultiert ein Prepolymer mit folgenden Kenndaten:
NCO-Gehalt: 19,25 %
Viskosität: 240 mPa.s/23°C

### Beispiel 6 - Prepolymer 6

615 g des Polyisocyanates aus Beispiel 5 werden mit 385 g Polyhydroxylverbindung B1 wie in Beispiel 5 umgesetzt. Es resultiert ein Prepolymer mit folgenden Kenndaten:
NCO-Gehalt: 17,6 %
Viskosität: 310 mPa.s/23°C

### Beispiel 7 - Prepolymer 7

360 g des Polyisocyanats aus Beispiel 5 werden mit 440 g Polyhydroxylverbindung B1 wie in Beispiel 5 umgesetzt. Es resultiert ein Prepolymer mit folgenden Kenndaten:
NCO-Gehalt: 15,6 %
Viskosität: 360 mPa.s/23°C

Die Beispiele 5 bis 7 zeigen, daß die Prepolymer-Viskosität weitgehend unabhängig von gewählten NCO/OH-Verhältnis ist.

### Beispiel 8

### Herstellung einer lösemittelfreien Zwei-Komponenten-Polyurethan Beschichtung

103 g Prepolymer 1 und 8,9 g 1-Methyl-3,5-diethylphenylendiamin-(2,4) werden gut verrührt. Die Mischung besitzt eine Anfangsviskosität von 4400 mPa.s/23°C und eine Topfzeit von 15 Minuten. Ein bei Raumtemperatur auf eine Glasplatte aufgerakelter Film ist nach ca. 45 Minuten drucktrocken. Nach Alterung entsteht ein hochglänzender, elastischer Film mit guter Reißfestigkeit.

### Beispiel 9

### Herstellung einer lösemittelfreien Zwei-Komponenten-Polyurethanbeschichtung

218 g Prepolymer 5 und 340 g einer Polyolmischung bestehend aus 75 Gew.-Teilen Ricinusöl und 25 Gew.-Teilen eines Kondensationsproduktes aus Cyclohexanon und Formaldehyd (OH-Zahl 165, Viskosität 5000 mPa.s/23°C) werden gut vermischt. Die Mischung besitzt eine Anfangsviskosität von 2400 mPa.s/23°C und eine Topfzeit von 70 Minuten. Ein auf eine Glasplatte aufgerakelter Film härtet zu einem zähelastischen Polymer mit guter Abriebfestigkeit. Im Verlauf der Härtung beobachtet man keine Blasenbildung.

### Beispiel 10

### (nicht erfindungsgemäßes Vergleichsbeispiel zu Beispiel 1)

### Herstellung eines Prepolymers auf Polyetherbasis

850 g eines durch Propoxylierung von Propylenglykol gewonnenen Polyethers (OH-Zahl 66, Viskosität 310 mPa.s/23°C) und 174 g 2,4-Diisocyanatotoluol werden auf 50°C erwärmt und 7 h bei dieser Temperatur prepolymerisiert. Es resultiert ein NCO-Prepolymer mit folgenden Kenndaten:
NCO-Gehalt: 4,1 %
Viskosität: 7200 mPa.s/23°C
Monomerengehalt: 0,79 % freies 2,4-Diisocyanatotoluol

### Beispiel 11

### (nicht erfindungsgemäßes Vergleichsbeispiel zu Beispiel 5)

360 g des Polyisocyanats aus Beispiel 5 werden mit 440 g des Polyethers aus Beispiel 10 4 Stunden bei 50°C prepolymerisiert. Es resultiert ein NCO-Prepolymer mit folgenden Kenndaten:
NCO-Gehalt: 15,4 %
Viskosität: 980 mPa.s/23°C

### Beispiel 12

218 g Prepolymer 5 und 848 g Polyhydroxylverbindung B1 werden innig vermischt. Es resultiert eine Mischung mit extrem niedriger Anfangsviskosität von nur 290 mPa.s/ 23°C. Die Topfzeit beträgt 70 Minuten. Ein auf eine Glasplatte aufgebrachter Film härtet zu einem hochglänzenden, blasenfreien und zähelastischen Polymerfilm.

## Patentansprüche

1. Ether- und Estergruppen aufweisende Isocyanatprepolymere mit einem NCO-Gehalt von 1,9 bis 25 Gew.-% auf Basis von
A) einer Polyisocyanatkomponente, bestehend aus mindestens einem organischen Polyisocyanat des mittleren Molekulargewichts 168 bis 1000,
und organischen Polyhydroxylverbindungen, bestehend im wesentlichen aus
B) Ether- und Estergruppen aufweisenden Polyhydroxylverbindungen
und gegebenenfalls
C) organischen Polyhydroxylverbindungen des Molekulargewichtsbereichs 62 bis 200 in einer Menge von bis zu 25 Hydroxyläquivalent-%, bezogen auf die Komponente B),
dadurch gekennzeichnet, daß die Polyhydroxylverbindungen B) eine mittlere Hydroxylfunktionalität von 2 bis 3 und eine mittlere Hydroxylzahl von 40 bis 90 aufweisen und Veresterungsprodukte von
(i) Polyetherpolyolen einer mittleren Hydroxylzahl von 200 bis 600 mit
(ii) 25 bis 67 Äquivalent-% einer organischen Carbonsäure-Komponente, bestehend aus mindestens einer organischen Monocarbonsäure oder einem Gemisch mindestens einer organischen Monocarbonsäure mit bis zu 20 Carboxyl-Äquivalent-%, bezogen auf alle Carbonsäuren, an mehrbasischen organischen Carbonsäuren,
bezogen auf die Hydroxylgruppen der Komponente (i) und die Carboxylgruppen der Komponente (ii), darstellen.

2. Verfahren zur Herstellung von Ether- und Estergruppen aufweisenden Isocyanatprepolymeren gemäß Anspruch 1 durch Umsetzung von
A) organischen Polyisocyanaten des mittleren Molekulargewichts 168 bis 1000
mit organischen Polyhydroxylverbindungen, bestehend im wesentlichen aus
B) Ether- und Estergruppen aufweisenden Polyhydroxylverbindungen
und gegebenenfalls
C) organischen Polyhydroxylverbindungen des Molekulargewichtsbereichs 62 bis 200 in einer Menge von bis zu 25 Hydroxyläquivalent-%, bezogen auf die Komponente B),
unter Einhaltung eines NCO/OH-Äquivalentverhältnisses von 1,7:1 bis 20:1 und gegebenenfalls anschließende destillative Entfernung von nicht umgesetzten, überschüssigen Ausgangspolyisocyanaten A), dadurch gekennzeichnet, daß man als Komponente B) Ether- und Estergruppen aufweisende Polyhydroxylverbindungen mit einer mittleren Hydroxylfunktionalität von 2 bis 3 und einer mittleren Hydroxylzahl von 40 bis 90 verwendet, die Veresterungsprodukte von
(i) Polyetherpolyolen einer mittleren Hydroxylzahl von 200 bis 600 mit
(ii) 25 bis 67 Äquivalent-% einer organischen Carbonsäure-Komponente, bestehend aus mindestens einer organischen Monocarbonsäure oder einem Gemisch mindestens einer organischen Monocarbonsäure mit bis zu 20 Carboxyl-Äquivalent-%, bezogen auf alle Carbonsäuren, an mehrbasischen organischen Carbonsäuren,
bezogen auf die Hydroxylgruppen der Komponente (i) und die Carboxylgruppen der Komponente (ii), darstellen.

3. Verfahren gemäß Anspruch 2, dadurch gekennzeichnet, daß man als Komponente A) aromatische Polyisocyanate des mittleren Molekulargewichts 174 bis 500 verwendet.

4. Verfahren gemäß Anspruch 2 und 3, dadurch gekennzeichnet, daß man als Komponente A) Polyisocyanatgemische der Diphenylmethanreihe verwendet.

5. Verfahren gemäß Anspruch 2 bis 4, dadurch gekennzeichnet, daß man als Komponente (ii) Fettsäuren mit mehr als 10 Kohlenstoffatomen verwendet.

6. Verfahren gemäß Anspruch 2 bis 5, dadurch gekennzeichnet, daß man als Komponente (ii) ungesättigte Fettsäuren mit mehr als 10 Kohlenstoffatomen und einer Iodzahl von 10 bis 300 verwendet.

7. Verwendung der Isocyanatprepolymeren gemäß Anspruch 1 als Bindemittel oder Bindemittelkomponente in lösungsmittelarmen oder -freien Polyurethan-Beschichtungsmitteln, -Dichtmassen oder -Vergußmassen.

## Claims

1. Isocyanate prepolymers possessing ether and ester groups and having an NCO content of from 1.9 to 25 wt.%, based on
A) a polyisocyanate component, consisting of at least one organic polyisocyanate having an average molecular weight of from 168 to 1000,
and organic polyhydroxyl compounds, consisting substantially of
B) polyhydroxyl compounds possessing ether and ester groups
and optionally
C) organic polyhydroxyl compounds, in the molecular weight range of from 62 to 200, in a quantity of up to 25 hydroxyl equivalents-%, referred to component B),
characterised in that the polyhydroxyl compounds B) have an average hydroxyl functionality of from 2 to 3 and an average hydroxyl number of from 40 to 90 and are esterification products of
(i) polyether polyols having an average hydroxyl number of from 200 to 600 with
(ii) from 25 to 67 equivalents-% of an organic carboxylic acid component, consisting of at least one organic monocarboxylic acid or of a mixture of at least one organic monocarboxylic acid having up to 20 carboxyl equivalents-%, referred to all carboxylic acids, of polybasic organic carboxylic acids,
referred to the hydroxyl groups of component (i) and the carboxyl groups of component (ii).

2. Method for the preparation of isocyanate prepolymers possessing ether and ester groups according to claim 1 by the reaction of
A) organic polyisocyanates having an average molecular weight of from 168 to 1000
with organic polyhydroxyl compounds consisting substantially of
B) polyhydroxyl compounds possessing ether and ester groups
and optionally
C) organic polyhydroxyl compounds, in the molecular weight range of from 62 to 200, in a quantity of up to 25 hydroxyl equivalents-%, referred to component B),
while maintaining an NCO/OH equivalent ratio of from 1.7:1 to 20:1 and optional subsequent removal by distillation of unreacted excess starting polyisocyanates A), characterised in that the compounds used as component B) are polyhydroxyl compounds possessing ether and ester groups and having an average hydroxyl functionality of from 2 to 3 and an average hydroxyl number of from 40 to 90, which are esterification products of
(i) polyether polyols having an average hydroxyl number of from 200 to 600 with
(ii) from 25 to 67 equivalents-% of an organic carboxylic acid component, consisting of at least one organic monocarboxylic acid or of a mixture of at least one organic monocarboxylic acid having up to 20 carboxyl equivalents-%, referred to all carboxylic acids, of polybasic organic carboxylic acids,
referred to the hydroxyl groups of component (i) and the carboxyl groups of component (ii).

3. Method according to claim 2, characterised in that aromatic polyisocyanates having an average molecular weight of from 174 to 500 are used as component A).

4. Method according to claim 2 and 3, characterised in that polyisocyanate mixtures of the diphenylmethane series are used as component A).

5. Method according to claims 2 to 4, characterised in that fatty acids having more than 10 carbon atoms are used as component (ii).

6. Method according to claims 2 to 5, characterised in that unsaturated fatty acids having more than 10 carbon atoms and an iodine number of from 10 to 300 are used as component (ii).

7. Use of the isocyanate prepolymers according to claim 1 as binders or binder components in polyurethane coating materials, jointing compounds or casting compounds which are low in or free from solvent.

## Revendications

1. Prépolymères d'isocyanate présentant des groupes éther et ester, d'une teneur en NCO de 1,9 à 25% en poids, à base de
A) un composant polyisocyanate, constitué d'au moins un polyisocyanate organique d'un poids moléculaire moyen de 168 à 1000,
et des composés organiques polyhydroxylés constitués essentiellement de
B) composés polyhydroxylés présentant des groupes éther et ester,
et éventuellement
C) des composés organiques polyhydroxylés d'un poids moléculaire dans la plage de 62 à 200, en quantité pouvant atteindre 25% en équivalents d'hydroxyle calculés par rapport au composant B),
caractérisés en ce que les composés polyhydroxylés B) présentent une fonctionnalité hydroxylique moyenne de 2 à 3 et un indice d'hydroxyle moyen de 40 à 90, et qui constituent des produits d'estérification de
(i) polyétherpolyols d'un indice d'hydroxyle moyen de 200 à 600, avec
(ii) 25 à 67% en équivalents d'un composant acide carboxylique organique constitué d'au moins un mono-acide carboxylique organique ou d'un mélange d'au moins un mono-acide carboxylique organique avec jusqu'à 20% en équivalents de carboxyle , calculés sur tous les acides carboxyliques, d'acides carboxyliques organiques polybasiques,
calculés sur les groupes hydroxyle du composant (i) et les groupes carboxyle du composant (ii).

2. Procédé de préparation de prépolymères d'isocyanate présentant des groupes éther et ester selon la revendication 1, par réaction de
A) polyisocyanates organiques d'un poids moléculaire moyen de 168 à 1000
avec des composés polyhydroxylés, constitués essentiellement
B) de composés polyhydroxylés présentant des groupes éther et ester
et éventuellement
C) de composés organiques polyhydroxylés d'un poids moléculaire dans la plage de 62 à 200, en quantité pouvant atteindre 25% en équivalents d'hydroxyle , calculés sur le composant B),
en maintenant un rapport d'équivalents NCO/OH de 1,7:1 à 20:1, et éventuellement extraction subséquente par distillation de polyisocyanates de départ A) non convertis et en excès, caractérisé en ce que l'on utilise comme
composant B) des composés polyhydroxylés présentant des groupes éther et ester, avec une fonctionnalité hydroxyle moyenne de 2 à 3 et un indice hydroxyle moyen de 40 à 90, qui constituent des produits d'estérification de
(i) polyétherpolyols d'un indice hydroxyle moyen de 200 à 600 avec
(ii) 25 à 67%, en équivalents d'un composant acide carboxylique organique constitué d'au moins un acide monocarboxylique organique ou d'un mélange d'au moins un acide organique monocarboxylique avec jusqu'à 20% en équivalents de carboxyle , calculés sur tous les acides carboxyliques, d'acides organiques polybasiques,
calculés sur les groupes hydroxyle du composant (i) et les groupes carboxyle du composant (ii).

3. Procédé selon la revendication 2, caractérisé en ce que l'on utilise comme composant A) des polyisocyanates aromatiques d'un poids moléculaire moyen de 174 à 500.

4. Procédé selon la revendication 2 et 3, caractérisé en ce que l'on utilise comme composant A) un mélange de polyisocyanates de la série du diphénylméthane.

5. Procédé selon la revendication 2 à 4, caractérisé en ce que l'on utilise comme composant (ii) des acides gras présentant plus de 10 atomes de carbone.

6. Procédé selon la revendication 2 à 5, caractérisé en ce que l'on utilise comme composant (ii) des acides gras insaturés comportant plus de 10 atomes de carbone et présentant un indice d'iode de 10 à 300.

7. Utilisation des prépolymères d'isocyanate selon la revendication 1, comme liants ou composants de liants dans des revêtements, des pâtes d'étanchéité ou des pâtes de remplissage au polyuréthane, pauvres en solvants ou sans solvants.
